(19) **Europäisches Patentamt / European Patent Office / Office européen des brevets**

(11) **EP 4 775 850 A1**

(12) **EUROPEAN PATENT APPLICATION**
published in accordance with Art. 153(4) EPC

(43) Date of publication:
**15.07.2026 Bulletin 2026/29**

(21) Application number: **24862550.1**

(22) Date of filing: **16.08.2024**

(51) International Patent Classification (IPC):
**F16H 33/02** (2006.01)   **B25J 5/00** (2006.01)
**F16H 1/28** (2006.01)

(52) Cooperative Patent Classification (CPC):
**B25J 5/00; F16H 1/28; F16H 33/02**

(86) International application number:
**PCT/JP2024/029215**

(87) International publication number:
**WO 2025/052896 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 JP 2023144866**

(71) Applicants:
• **OMRON Corporation**
  **Kyoto-shi, Kyoto 600-8530 (JP)**
• **Tohoku University**
  **Sendai-shi, Miyagi 980-8577 (JP)**

(72) Inventors:
• **TAKAHASHI, Tomoya**
  **Sendai-shi, Miyagi 980-8577 (JP)**
• **TANAKA, Kazutoshi**
  **Tokyo 113-0033 (JP)**
• **TADAKUMA, Kenjiro**
  **Sendai-shi, Miyagi 980-8577 (JP)**
• **WATANABE, Masahiro**
  **Sendai-shi, Miyagi 980-8577 (JP)**

(74) Representative: **SONN Patentanwälte GmbH & Co KG**
**Riemergasse 14**
**1010 Wien (AT)**

(54) **DRIVE DEVICE**

(57)    A drive device 10 includes a center pulley 12 that is rotatable about a center axis X, a motor 14, a spiral spring 16 serving as an energy storage part, an output part 18, and a lock mechanism 20. A first end 16A of the spiral spring 16 is fixed to the center pulley 12. Rotation of the center pulley 12 by the motor 14 in a first direction causes the spiral spring 16 to extend and store energy. When the stored energy is released, the spiral spring 16 contracts and moves around the center axis X such that a second end 16B approaches the first end 16A. The output part 18 rotates in association with the movement of the spiral spring 16. The lock mechanism 20 is switchable between a lock state that restricts movement of the spiral spring 16 and a lock release state that allows the spiral spring 16 to move freely.

FIG.1

**Description**

TECHNICAL FIELD

The present disclosure relates to a drive device.

BACKGROUND ART

Japanese Patent Application Laid-Open (JP-A) No. 2013-255969 discloses an arm mechanism in which, in a state in which the arm is fixed by locking means, a tension coil spring is pulled to extend by an actuator and stores energy, and when the fixing of the arm by the locking means is released, energy in the spring is released and provides rotary force to the arm.

SUMMARY OF INVENTION

TECHNICAL PROBLEM

If a legged mobile robot is capable not only of simply walking on flat ground but also of dynamic movements such as jumping, running and the like, the mobile robot may be able to climb steps and the like, and the scope of tasks the robot may carry out is broadened. Joint drive devices with capabilities for outputting large torques at high speeds at short intervals are desired for moving legged robots in high jumps, nimble running, and dynamic movements with high rates of repetition. In addition, reductions in weight of drive devices are desirable for achieving high accelerations.

When, in order to reduce weight, a small actuator with a low output power is used to provide a large output, a large amount of energy can be extracted from the actuator if the energy is accumulated in a spring over a long period at a high gear ratio and high torque. However, because this structure requires a long period for energy accumulation, the structure is suited to movements such as single vertical jumps but is not suited to operations such as continuous jumping.

In the conventional example described above, an arm that has been rotated must return to a start position for the arm to repeat the same rotation, and operations at short intervals are considered difficult.

An object of the present disclosure is to enable intermittent repetitions of output at short intervals.

SOLUTION TO PROBLEM

In this drive device, a rotor is continuously rotated by an actuator. A first end of an energy storage part is attached to the rotor. When the rotor is rotated in a lock state in which movement of the energy storage part is restricted by a lock mechanism, the energy storage part extends and stores energy. From a state in which energy is stored, when the lock mechanism is put into a lock release state and the restriction of movement of the energy storage part is released, the energy storage part contracts and a second end of the energy storage part moves around a center axis so as to approach the first end. At this time, the energy stored in the energy storage part is released. This energy is output through an output part that is rotated by the movement of the energy storage part. Because the rotor to which the first end of the energy storage part is attached is being continuously rotated by the actuator, when the energy is released, counter-rotation of the rotor such that the first end of the energy storage part approaches the second end is suppressed.

Because the rotor continuously rotates, storage of energy starts immediately when the energy storage part is put into the lock state after a release of energy. Thus, there is no need to return the rotor to an initial position for subsequent energy storage. Therefore, outputs may be repeated intermittently at short intervals.

When outputs of the output part are utilized to, for example, move a leg part of a robot, dynamic movements such as jumps, running and the like may be performed with high rates of repetition.

A drive device according to a first aspect includes: a rotor that is rotatable around a center axis; an actuator that causes the rotor to rotate in one direction; an energy storage part, a first end of which is attached to the rotor, the energy storage part extending in association with rotation of the rotor and storing energy, and when the energy storage part releases energy, the energy storage part contracting and moving around the center axis such that the second end thereof approaches the first end; an output part that rotates in association with movement of the energy storage part; and a lock mechanism that is switchable between a lock state in which the lock mechanism restricts movement of the energy storage part, and a lock release state in which the restriction of movement of the energy storage part is released.

In a second aspect, in the drive device according to the first aspect, the energy storage part is a constant force spring.

In this drive device, because the energy storage part is a constant force spring, the energy storage part may be extended and store energy even with a small, light weight, relatively weak actuator.

In a third aspect, in the drive device according to the first aspect, in addition to input from the actuator, the energy storage part stores, as energy, an external force that is input so as to extend the energy storage part.

In this drive device, the energy storage part stores external forces that are applied so as to extend the energy storage part, for example, storing reaction forces at times of ground contact of a leg part of a robot as energy. Therefore, higher performance may be exhibited.

In a fourth aspect, the drive device according to the third aspect further includes a planetary gear mechanism that includes a sun gear, a planetary gear that orbits around the sun gear while meshing with the sun gear and spinning, and an internal gear that meshes with the planetary gear. The actuator causes both the rotor and the sun gear to rotate, the second end of the energy storage part is attached to a carrier that supports the planetary gear, and the output part outputs rotary torque of the internal gear.

In this drive device, input forces to the planetary gear mechanism include inputs from the actuator to the sun gear and inputs from the energy storage part to the carrier. Inputs from the energy storage part to the carrier include stored energy from external forces. An output from the planetary gear mechanism is output from the internal gear to the output part. The output is determined by a difference between rotation of the sun gear and rotation of the carrier.

ADVANTAGEOUS EFFECTS OF INVENTION

According to the present disclosure, outputs may be repeated intermittently at short intervals.

BRIEF DESCRIPTION OF DRAWINGS

Fig. 1 is a diagram schematically showing a drive device according to a present exemplary embodiment.
Fig. 2 is a diagram schematically showing an operation of the drive device according to the present exemplary embodiment in which an energy storage part is put into a lock state and energy is stored in the energy storage part.
Fig. 3 is a diagram schematically showing an operation of the drive device according to the present exemplary embodiment when the energy storage part is put into a lock release state and energy is released from the energy storage part.
Fig. 4 is a diagram showing the appearance of a testing device.
Fig. 5 is a graph showing test results.

DESCRIPTION OF EMBODIMENTS

Below, modes for embodying the present disclosure are described with reference to the drawings. In the drawings, structural elements being indicated with the same reference symbols means that those structural elements are the same or similar. In the exemplary embodiment described below, duplicative descriptions and reference symbols may be omitted. The drawings used for the descriptions below are all schematic illustrations: dimensional relationships of elements, proportions of elements and so forth illustrated in the drawings do not necessarily match reality. Moreover, dimensional relationships of elements, proportions of elements and so forth do not necessarily match between plural drawings.

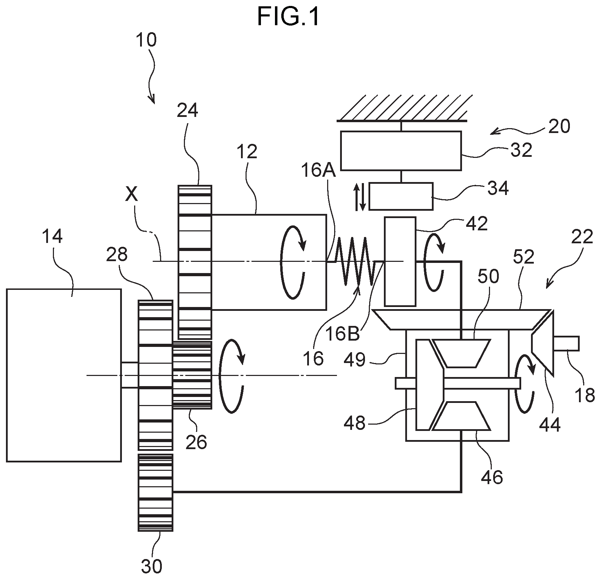

In Fig. 1, a drive device 10 according to a present exemplary embodiment includes a center pulley 12, a motor 14, a spiral spring 16, an output part 18, a lock mechanism 20, and a planetary gear mechanism 22. The center pulley 12 is an example of a rotor, the motor 14 is an example of an actuator, and the spiral spring 16 is an example of an energy storage part.

The center pulley 12 is rotatable around a center axis X. A gear 24 is coaxially attached to the center pulley 12.

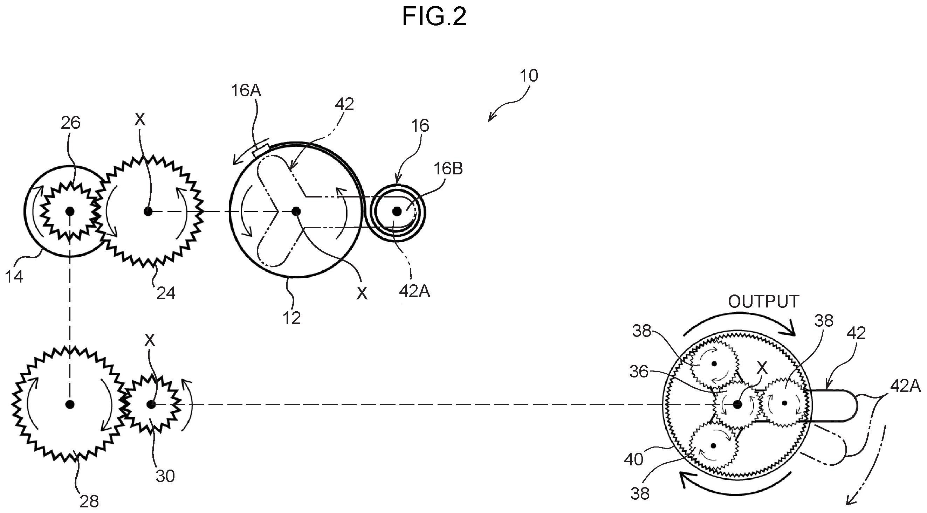

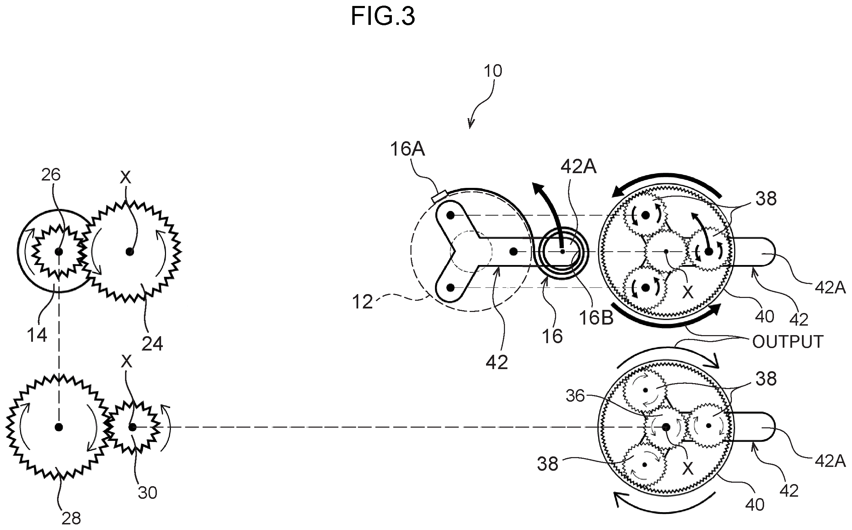

The motor 14 is a drive source for rotating the center pulley 12 in a first direction, specifically the counterclockwise direction in Fig. 2 and Fig. 3. The motor 14 rotates continuously during operations. A small gear 26 and a large gear 28 are coaxially attached to a rotary shaft of the motor 14. The small gear 26 meshes with the gear 24 of the center pulley 12. The large gear 28 meshes with a gear 30 that is rotatable around the center axis X. A sun gear 36 of the planetary gear mechanism 22 is attached to be, for example, coaxial with the gear 30. When the gear 30 rotates, the sun gear 36 rotates together with the gear 30. In the present exemplary embodiment, the motor 14 rotates in the opposite direction (the clockwise direction) to the first direction, and the center pulley 12 and the sun gear 36 rotate in the first direction (the counterclockwise direction).

The spiral spring 16 is a constant force spring of which a first end 16A is attached to the center pulley 12. The spiral spring 16 extends in association with rotation of the center pulley 12 and stores energy. When this energy is released, the spiral spring 16 contracts and moves around the center axis X such that a second end 16B of the spiral spring 16 approaches the first end 16A. The meaning of the term "constant force spring" as used herein is intended to include a spring whose load is substantially constant regardless of stroke length. The first end 16A of the spiral spring 16 is attached to, for example, an outer periphery face of the center pulley 12. The second end 16B of the spiral spring 16 is attached to an arm 42A that extends from a carrier 42 of the planetary gear mechanism 22, which is described below. Other members may be interposed for attachment of the first end 16A and the second end 16B of the spiral spring 16. A structure is sufficient that extends such that the first end 16A moves away from the second end 16B in association with the rotation of the center pulley 12 when energy is being stored, and the second end 16B is movable around the center axis X so as to approach the first end 16A when energy is being released.

The output part 18 is a portion that rotates in association with movement of the spiral spring 16. The output part 18 corresponds to the shaft of a bevel gear 44 in Fig. 1 and to an internal gear 40 of the planetary gear mechanism 22 in Fig. 2 and Fig. 3, which is described below.

The lock mechanism 20 is switchable between a lock state (Fig. 2) that restricts movement of the spiral spring 16 and a lock release state (Fig. 3) that releases the restriction of movement of the spiral spring 16. For example, the lock mechanism 20 includes a motor 32 and a latch 34 that is an example of a lock member. The latch 34 is driven by the motor 32 and is capable of meshing with the carrier 42 or with a member that rotates together with the carrier 42. When, for example, the latch 34 meshes with the carrier 42, the lock mechanism 20 is in the lock state in which rotation of the carrier 42 is restricted. When this meshing is released, the lock mechanism 20 is in a lock release state in which the carrier 42 may rotate.

In addition to the input from the motor 14, the spiral spring 16 stores an external force that is applied so as to extend the spiral spring 16 as energy. To realize this energy storage, a one-way clutch such as a ratchet or the like may be used at the lock mechanism 20. That is, in the lock state in Fig. 2 and Fig. 3, the carrier 42 may not be rotatable in the counterclockwise direction in which the spiral spring 16 contracts but may be rotatable in the clockwise direction in which the spiral spring 16 extends.

The planetary gear mechanism 22 is provided with the sun gear 36, for example, three of planetary gears 38, and the internal gear 40. Each planetary gear 38 meshes with the sun gear 36 and spins while orbiting around the sun gear 36. The internal gear 40 meshes with the planetary gears 38.

As well as the center pulley 12, the motor 14 causes the small gear 26 and, via the large gear 28 and gear 30, the sun gear 36 to rotate as described above. The second end 16B of the spiral spring 16 is attached to the carrier 42 that supports the planetary gears 38. The output part 18 outputs rotary torque of the internal gear 40.

The planetary gear mechanism 22 is depicted as a differential apparatus in Fig. 1. Because a planetary gear mechanism is a kind of differential apparatus, the planetary gear mechanism 22 may serve as this differential apparatus. In the differential apparatus in Fig. 1, rotation of the motor 32 is input to a side gear 46 via the large gear 28 and the gear 30. Rotation of a member corresponding to the carrier 42 that is attached to the second end 16B of the spiral spring 16 is transmitted to a side gear 50 that opposes the side gear 46. The side gears 46 and 50 mesh with a pinion gear 48. A case 49 supports the pinion gear 48, and a ring gear 52 is attached to the case 49. The ring gear 52 meshes with the bevel gear 44 of the output part 18. In the differential apparatus in Fig. 1, the pinion gear 48 rotates along the side gears 46 and 50 due to differences in rotation of the side gears 46 and 50, and the ring gear 52 rotates and outputs rotary torque of the bevel gear 44 through the output part 18.

In this mechanism, the planetary gear mechanism 22 may be structured such that an angle $\theta_{o1}$ through which each of the center pulley 12 (represented by the symbol "A") and the carrier 42 (represented by the symbol "B") relatively rotate when energy is being stored and an angle $\theta_{o2}$ through which the carrier 42 rotates when energy is being released are opposite in direction and equal in magnitude ($\theta_{o1} = -\theta_{o2}$). A procedure for designing this planetary gear mechanism 22 is described. First, rotation angles of A are represented by $\theta_a$, rotation angles of B are represented by $\theta_b$, and the output angle $\theta_o$ via the planetary gear mechanism 22 is set to $\theta_o = k_a\theta_a + k_b\theta_b$. These symbols $k_a$ and $k_b$ represent transmission ratios of the output relative to the respective inputs. For when energy is being stored, B is fixed and A is rotated by an angle $\theta_a = \theta$ before release. Because B is fixed, $\theta_b = 0$. Therefore, a rotation angle $\theta_{o1}$ when energy is being stored is $k_a\theta$. When energy is being released, B moves by an amount corresponding to the resilient energy stored in the spiral spring 16. Therefore, B moves through $\theta_b = \theta$. The motor 14 continues to rotate when energy is being released, but if $8_a$ while the energy is being released is assumed to be small enough to be ignored ($\theta_a \approx 0$), an output angle when the energy is being released $\theta_{o2} = k_b\theta$. Given that $\theta_{o1} = -\theta_{o2}$, $k_a = -k_b$ applies. Therefore, the output of the planetary gear mechanism 22 can be expressed as follows.

$$\theta_o = -k_b\theta_a + k_b\theta_b \qquad (1)$$

From this expression, it can be seen that the operating mechanism is a mechanism that, regardless of positions of the center pulley 12 (A) and the carrier 42 (B), outputs a difference between the angles of A and B, which is to say an extension amount of the spiral spring 16, as an angle.

Contributions of the two inputs to the output of the planetary gear mechanism 22 are expressed below. First, for a relationship between the input of the sun gear 36 and the output of the internal gear 40, if a rotation angle of the motor 14 when energy is being stored is represented by $\theta i$, its contribution $\theta_{o1}$ to the output is expressed as follows.

$$\theta_{o1} = -\frac{1}{N_{i1}} \frac{Z_a}{Z_c} \theta i \qquad (2)$$

In this expression, $Z_a$ and $Z_c$ represent the numbers of teeth of, respectively, the sun gear 36 and the internal gear 40, and $N_{i1}$ represents a gear ratio between the motor 14 and the sun gear 36. Next, when the spring system on the carrier 42 is regarded as an input, the configuration is that of a solar-type planetary gear device. The rotation angle of the carrier 42 is equal to the rotation angle of the center pulley 12 when energy is being stored. If the gearing ratio between the motor 14 and the center pulley 12 is represented by $N_{i2}$, a final contribution $\theta_{o2}$ to the output is expressed as follows.

$$\theta_{o2} = \frac{1}{N_{i2}} \frac{Z_a + Z_c}{Z_c} \theta i$$

Therefore, the final output $\theta_o$ using the planetary gear mechanism 22 can be expressed as follows.

$$\theta_o = \theta_{o1} + \theta_{o2} = -\frac{1}{N_{i1}} \frac{Z_a}{Z_c} \theta i + \frac{1}{N_{i2}} \frac{Z_a + Z_c}{Z_c} \theta i$$

Because this expression is equivalent to expression (1), $\theta_{o1}/\theta_{o2} = -1$ may be applied. Therefore, the relationships below should be satisfied.

$$\frac{\theta_{o1}}{\theta_{o2}} = -\frac{N_{i2}}{N_{i1}} \frac{Z_a}{Z_c} \frac{Z_c}{Z_a + Z_c} = -1$$

$$\frac{N_{i2}}{N_{i1}} = \frac{Z_a + Z_c}{Z_a} \qquad (3)$$

Because numbers of teeth that may be selected when constructing the planetary gear mechanism 22 are limited, for practical design the procedure is to first select Za and Zc and then specify $N_{i1}$ and $N_{i2}$. As a design example, $Z_a$=19, $Z_c$=57, $N_{i1}$=1/2 and $N_{i2}$=2.

- Operation -

The present exemplary embodiment is structured as described above and operation thereof is described below. In Fig. 2 and Fig. 3, the narrow arrows indicate rotations originating from the motor 14, the thick arrows indicate rotations originating from the spiral spring 16, and the broken lines indicate directly coupled transmissions of rotation. That is, the members that are linked by broken lines rotate integrally. The arrows marked "OUTPUT" indicate rotation of the output part 18. The two-dot chain line arrow in Fig. 2 indicates rotation of the carrier 42 due to an external force.

In Fig. 2 and Fig. 3, the center pulley 12 of the drive device 10 according to the present exemplary embodiment is rotated continuously by the motor 14. The first end 16A of the spiral spring 16 is attached to the center pulley 12. When the lock mechanism 20 is in the lock release state, the spiral spring 16 rotates integrally with the center pulley 12 (the rotor). When the center pulley 12 is rotated in the lock state in which movement of the spiral spring 16 is restricted by the lock mechanism 20, the spiral spring 16 extends and stores energy.

From the state in which energy has been stored, when the lock mechanism 20 is put into the lock release state and the restriction on movement of the spiral spring 16 is released, the spiral spring 16 contracts and moves around the center axis X such that the second end 16B of the spiral spring 16 approaches the first end 16A. At this time, the energy stored in the spiral spring 16 is released, and this energy is output through the output part 18 that rotates due to the movement of the spiral spring 16.

Because the center pulley 12 to which the first end 16A of the spiral spring 16 is attached is continuously rotated by the motor 14, when energy is being released, counter-rotation of the center pulley 12 such that the first end 16A of the spiral spring 16 approaches the second end 16B is suppressed. Because a larger amount of resilient energy is stored, a torque of maximum efficiency of the motor 14 may be applied regardless of displacement of the spring.

Because the center pulley 12 is continuously rotated in the first direction (the counterclockwise direction in Fig. 2 and Fig. 3) by the rotation of the motor 14, when the spiral spring 16 is put into the lock state after energy has been released, storing of energy starts immediately. That is, there is no need to return the center pulley 12 to a start position for subsequent energy storage. Therefore, outputs may be repeated intermittently at short intervals.

When the outputs of the output part 18 are utilized to, for example, move a leg part of a robot, dynamic movements such as jumps, running and the like may be performed with high rates of repetition. When the outputs of the output part 18 are utilized to move an arm of a robot, rapid shaking of containers such as a flask or the like and rhythmic movements of tools such as a knife or the like may be carried out with high rates of repetition. When the outputs are utilized at processing machinery requiring momentary large forces, such as a press for metal forming, processing may be carried out with high rates of repetition.

In this drive device, because the spiral spring 16 that is a constant force spring is employed as the energy storage part, the spiral spring 16 may be extended and store energy even when the motor 14 is small, light weight and relatively weak. Moreover, because the constant force spring is employed, the torque of maximum efficiency of the motor 14 may be applied regardless of displacement of the spring, and a larger amount of resilient energy may be stored.

Because the spiral spring 16 employs, for example, a one-way clutch at the lock mechanism 20, an external force applied so as to extend the spiral spring 16, for example, a reaction force at a time of ground contact of a leg part of the robot, may be stored as energy. Therefore, higher performance may be exhibited.

When the planetary gear mechanism 22 is employed, input forces to the planetary gear mechanism 22 include inputs from the motor 14 to the sun gear 36 and inputs from the spiral spring 16 to the carrier 42. Inputs from the spiral spring 16 to the carrier 42 include energy stored due to external forces such as, for example, reaction forces at times of ground contact of a leg part of a robot. Outputs from the planetary gear mechanism 22 are output from the internal gear 40 to the output part 18. The outputs are determined by differences between rotation of the sun gear 36 and rotation of the carrier 42.

Thus, according to the present exemplary embodiment, outputs may be repeated intermittently at short intervals with the motor 14 being rotated continuously at maximum efficiency.

= Alternative Embodiments =

Hereabove, an example of an embodiment of the present disclosure has been described. Embodiments of the present disclosure are not limited by these descriptions and it will be clear that numerous modifications beyond these descriptions may be embodied within a technical scope not departing from the gist of the invention.

- Test Examples -

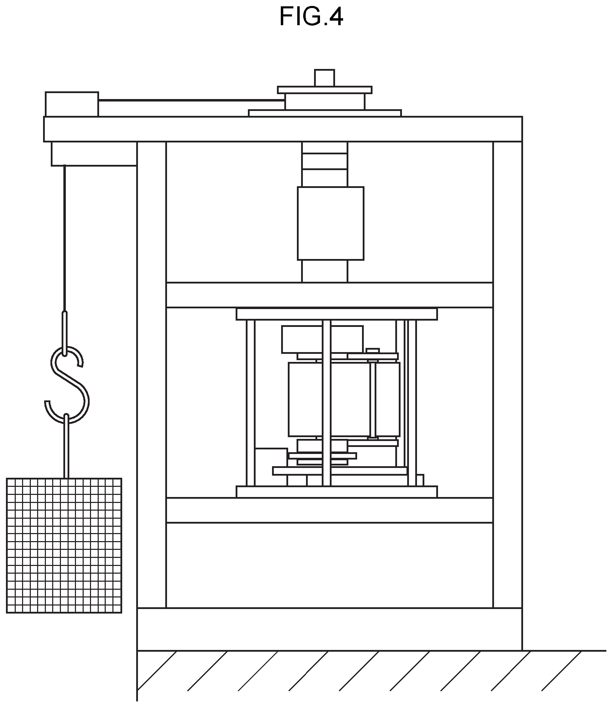

In order to evaluate characteristics of the proposed mechanism, operations of lifting a weight with large outputs from a spring were conducted. In tests, as illustrated in Fig. 4, a drive device according to the present exemplary embodiment was fixed to a frame, a wire was wound round a pulley connected to the output part of the drive device, and operations of lifting weights were conducted. The weights used for measurements were 500 g, 1000 g and 1500 g. At each weight, tests were conducted with an angle by which the center pulley was rotated to pull on the spring being increased in five steps of 45° each. Each time, after the lock mechanism was operated, a position of the spring system moved until the position of the spring system completely stopped. Therefore, the input angles and spring extension amounts had linear relationships but not proportional relationships. In the tests, locking was started when the center pulley had been rotated by a minimum of 67.5°. Thus, the smallest input angle was 67.5°+45°. Maximum torques and maximum speeds of the output part when energy was released in the tests were measured using a torque gauge (UTM II-10 Nm, manufactured by UNIPULSE CORPORATION). The measurements were carried out ten times for each set of conditions, and mean values were found.

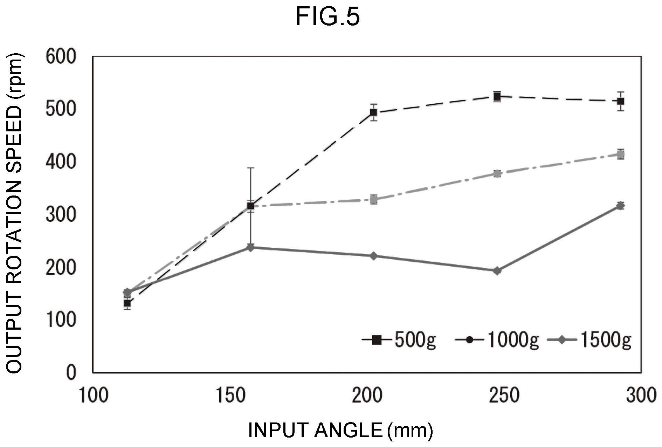

Results of the measurements are shown in Fig. 5. In Fig. 5, the horizontal axis shows input angles and the vertical axis shows rotation speeds. A tendency for the output speed to increase as the input angle increases was seen under all conditions, but continuous linear increases were not always seen. A tendency for amounts of increase in speed to decrease as the input angle increased was observed. This is likely to be because increases in speed were limited by friction at rotating components of the device and the like.

= Supplementary Notes =

Supplementary notes on available modes of the present disclosure are given below.

- Supplementary note 1 -

A drive device includes: a rotor that is rotatable around a center axis; an actuator that causes the rotor to rotate in one direction; an energy storage part, a first end of which is attached to the rotor, the energy storage part extending in association with rotation of the rotor and storing energy, and when the energy storage part releases energy, the energy storage part contracting and moving around the center axis such that a second end thereof approaches the first end; an output part that rotates in association with movement of the energy storage part; and a lock mechanism that is switchable between a lock state in which the lock mechanism restricts movement of the energy storage part, and a lock release state in which the restriction of movement of the energy storage part is released.

- Supplementary note 2 -

In the drive device according to supplementary note 1, the energy storage part is a constant force spring.

- Supplementary note 3 -

In the drive device according to supplementary note 1 or supplementary note 2, in addition to input from the actuator, the energy storage part stores, as energy, an external force that is input so as to extend the energy storage part.

- Supplementary note 4 -

The drive device according to any one of supplementary notes 1 to 3 further includes a planetary gear mechanism that includes a sun gear, a planetary gear that orbits around the sun gear while meshing with the sun gear and spinning, and an internal gear that meshes with the planetary gear. The actuator causes both the rotor and the sun gear to rotate, the second end of the energy storage part is attached to a carrier that supports the planetary gear, and the output part outputs rotary torque of the internal gear.

The disclosures of Japanese Patent Application No. 2023-144866 filed September 6, 2023 are incorporated into the present specification by reference in their entirety.

All references, patent applications and technical specifications cited in the present specification are incorporated by reference into the present specification to the same extent as if the individual references, patent applications and technical specifications were specifically and individually recited as being incorporated by reference.

Explanation of the Reference Symbols

| | |
|---|---|
| 10 | Drive device |
| 12 | Center pulley (rotor) |
| 14 | Motor |
| 16 | Spiral spring (energy storage part) |
| 16A | First end |
| 16B | Second end |
| 18 | Output part |
| 20 | Lock mechanism |
| 22 | Planetary gear mechanism |
| 36 | Sun gear |
| 38 | Planetary gear |
| 40 | Internal gear |
| 42 | Carrier |

**Claims**

**1.**  A drive device comprising:

a rotor that is rotatable around a center axis;

an actuator that causes the rotor to rotate in one direction;

an energy storage part, a first end of which is attached to the rotor, the energy storage part extending in association with rotation of the rotor and storing energy, and when the energy storage part releases energy, the energy storage part contracting and moving around the center axis such that a second end thereof approaches the first end;

an output part that rotates in association with movement of the energy storage part; and

a lock mechanism that is switchable between:

a lock state in which the lock mechanism restricts movement of the energy storage part, and

a lock release state in which the restriction of movement of the energy storage part is released.

2. The drive device according to claim 1, wherein the energy storage part is a constant force spring.

3. The drive device according to claim 1 wherein, in addition to input from the actuator, the energy storage part stores, as energy, an external force that is input so as to extend the energy storage part.

4. The drive device according to claim 3, further comprising a planetary gear mechanism that includes:

a sun gear,

a planetary gear that orbits around the sun gear while meshing with the sun gear and spinning, and

an internal gear that meshes with the planetary gear,

wherein:

the actuator causes both the rotor and the sun gear to rotate,

the second end of the energy storage part is attached to a carrier that supports the planetary gear, and

the output part outputs rotary torque of the internal gear.

# FIG.1

FIG.2

EP 4 775 850 A1

# FIG.3

EP 4 775 850 A1

# FIG.4

FIG.5

## INTERNATIONAL SEARCH REPORT

| International application No. |
| --- |
| **PCT/JP2024/029215** |

| A. | CLASSIFICATION OF SUBJECT MATTER |
| --- | --- |

*F16H 33/02*(2006.01)i; *B25J 5/00*(2006.01)i; *F16H 1/28*(2006.01)i
FI:   F16H33/02 B; F16H1/28; B25J5/00

According to International Patent Classification (IPC) or to both national classification and IPC

| B. | FIELDS SEARCHED |
| --- | --- |

Minimum documentation searched (classification system followed by classification symbols)

F16H33/02; B25J5/00; F16H1/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-185830 A (TOYOTA MOTOR EAST JAPAN INC.) 27 October 2016 (2016-10-27) paragraphs [0017]-[0024], fig. 1-6 | 1-2 |
| Y | paragraphs [0023]-[0024] | 1-3 |
| A | | 4 |
| Y | JP 2003-146285 A (TOYOTA JIDOSHA KABUSHIKI KAISHA) 21 May 2003 (2003-05-21) paragraphs [0016]-[0020], [0022]-[0024], [0041], fig. 1-3 | 1-3 |
| A | | 4 |
| Y | JP 54-50755 A (SOMENO, Fujio) 20 April 1979 (1979-04-20) p. 2, lower right column, line 3 to p. 3, upper left column, line 1 | 1-3 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2024** | **29 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/029215**

| Patent document cited in search report | | | Publication date (day/month/year) | Patent family member(s) | Publication date (day/month/year) |
|---|---|---|---|---|---|
| JP | 2016-185830 | A | 27 October 2016 | (Family: none) | |
| JP | 2003-146285 | A | 21 May 2003 | (Family: none) | |
| JP | 54-50755 | A | 20 April 1979 | (Family: none) | |

Form PCT/ISA/210 (patent family annex) (July 2022)

**REFERENCES CITED IN THE DESCRIPTION**

**Patent documents cited in the description**

- JP 2013255969 A
- JP 2023144866 A